(19) Europäisches Patentamt
European Patent Office
Office européen des brevets

(11) **EP 1 860 151 A1**

(12) **EUROPEAN PATENT APPLICATION**
published in accordance with Art. 158(3) EPC

(43) Date of publication:
**28.11.2007 Bulletin 2007/48**

(51) Int Cl.:
**C08L 33/06** $^{(2006.01)}$    **C08J 5/18** $^{(2006.01)}$
**C08L 67/00** $^{(2006.01)}$    **G02B 5/30** $^{(2006.01)}$

(21) Application number: **06711639.2**

(22) Date of filing: **13.01.2006**

(86) International application number:
**PCT/JP2006/300354**

(87) International publication number:
**WO 2006/077776 (27.07.2006 Gazette 2006/30)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.01.2005 JP 2005010434**

(71) Applicant: **Asahi Kasei Chemicals Corporation Tokyo 100-8440 (JP)**

(72) Inventors:
• **YONEZAWA, Jun**
**0 (JP)**
• **YAMAZAKI, Tatsuya**
**0 (JP)**
• **SHIRAI, Hiroshi**
**0 (JP)**
• **NAKAYAMA, Hirofumi**
**0 (JP)**

(74) Representative: **Strehl Schübel-Hopf & Partner Maximilianstrasse 54 80538 München (DE)**

(54) **RESIN COMPOSITION FOR OPTICAL MATERIAL**

(57) It is an object of the present invention to provide a resin composition that is used as an optical material and has a low change in birefringence with external force, and a molding thereof. According to the present invention, there is provided a resin composition comprising an acrylic resin (a) and an aliphatic polyester resin (b).

## FIG. 1

**Description**

Technical Field

The present invention relates to a resin composition that is used as an optical material and has excellent optical properties, and a molding containing the resin composition.

Background Art

In recent years, for example, as the market for displays has expanded, the demand for clearer images has increased, and hence there have been calls for optical materials that are not merely transparent but moreover are conferred with more advanced optical properties.
In general, a polymer has a different refractive index in the direction of the main molecular chain and a direction perpendicular thereto, i.e. birefringence occurs. In accordance with the application, it is required to strictly control this birefringence; in the case of a protective film used for a crystal polarizing plate, a polymeric material molding that has reduced birefringence even with the same total light transmittance is required, triacetyl cellulose being used as a typical material. On the other hand, for a retardation film such as a 1/4-wave plate having a function of changing light that has been polarized using a polarizing plate into circularly polarized light, this function is conferred by intentionally making the polymeric material molding be birefringent, a typical material being a polycarbonate or the like.
Moreover, in recent years, as liquid crystal displays have become larger in size and hence polymer optical material moldings required therefor have become larger in size, materials have become required for which the change in birefringence with external force is low so that the birefringence distribution arising due to unevenness in the external force is reduced. Polymeric optical materials having a low photoelastic coefficient as a newly required property have thus come to be required, a methyl methacrylate homopolymer (PMMA) and an amorphous polyolefin (APO) being known as such materials having a low photoelastic coefficient (see, for example, Kagaku Sosetsu, No. 39, 1998 (published by Japan Scientific Societies Press)). However, even with such materials, the change in birefringence with external force is still large, and hence there is a demand for materials having a yet lower change in birefringence with external force.
Meanwhile, blends of PMMA and polylactic acid are known as resin compositions (see, for example, Polymer, Vol. 39, No. 26, 1998). However, there is no disclosure or suggestion therein that such a blend has excellent optical properties. Moreover, a biaxially drawn film containing PMMA and polylactic acid (draw ratio 2.7x: corresponds to 170% in present invention) has been disclosed (see, for example, WO 2004/087812). However, there is no disclosure or suggestion therein that such as film can be suitably used in optical applications.

Disclosure of Invention

Problems to be Solved by the Invention

It is an object of the present invention to provide a resin composition that is used as an optical material and has a low change in birefringence with external force, and a molding thereof.

Means for Solving the Problems

The present inventors accomplished the present invention upon discovering that an optical material which contains a certain combination of resins and which has a low change in birefringence with external force.
That is, the present invention provides:

[1] a resin composition for optical material comprising: an acrylic resin (a); and an aliphatic polyester resin (b),
[2] the resin composition for optical material according to item [1], wherein the composition comprises from 60 to 95 parts by weight of the acrylic resin (a) and from 5 to 40 parts by weight of the aliphatic polyester resin (b),
[3] the resin composition for optical material according to item [1] or [2], wherein the aliphatic polyester resin is a polylactic acid resin,
[4] the resin composition for optical material according to any one of items [1] to [3], wherein in a relationship between birefringence when drawn ($\Delta$n(S)) and draw ratio (S), a value of a gradient K determined through a least squares approximation satisfies the following equation:

$$-8.0 \times 10^{-6} < K < 6.5 \times 10^{-5}$$

wherein K = $\Delta$n(S) / S,

[5] a molding for optical material obtained by molding the resin composition for optical material according to any one of items [1] to [4],

[6] the molding for optical material according to item [5], wherein a draw ratio in at least one direction is in a range of from 5% to less than 150%,

[7] the molding for optical material according to item [5] or [6], wherein a crystal melting heat ($\Delta$H) is less than 15 J/g,

[8] the molding for optical material according to any one of items [5] to [7], wherein the molding is a film or sheet which is molded by extrusion molding,

[9] the molding for optical material according to any one of items [5] to [7], the molding is a film or sheet which is molded by casting,

[10] the molding for optical molding according to any one of items [5] to [9], wherein a photoelastic coefficient is more than $-13 \times 10^{-12}$/Pa and less than $12 \times 10^{-12}$/Pa,

[11] the molding for optical material according to any one of items [5] to [10], wherein the molding is drawn in at least a uniaxial direction, and an absolute value of the photoelastic coefficient is not more than $4 \times 10^{-12}$/Pa, and an absolute value of a birefringence is not less than $5 \times 10^{-4}$,

[12] the molding for optical material according to any one of items [5] to [11], whrein the molding is drawn in at least a uniaxial direction, and an absolute value of the photoelastic coefficient is not more than $4 \times 10^{-12}$/Pa, and an absolute value of birefringence is less than $2.5 \times 10^{-5}$,

[13] the molding for optical material according to any one of items [5] to [12], wherein a absolute value Cw of a difference between the photoelastic coefficient C (700 nm) at a wavelength of 700 nm and the photoelastic coefficient C (400 nm) at a wavelength of 400 nm satisfies the following relationship:

$$Cw < 1 \times 10^{-12}/Pa$$

wherein Cw = |C (700 nm) - C (400 nm)|,

[14] a polarizing plate protective film comprising the molding according to any one of items [5] to [13],

[15] a retardation film comprising the molding according to any one of items 5 to 13.

Advantageous Effects of the Invention

According to the present invention, there can be provided a polymeric optical material that has a low change in birefringence with external force, and hence can be suitably used in displays and so on.

Brief Description of Drawings

FIG. 1 shows a graph showing the relationship between $\Delta$n and tensile stress for Examples 1 and 2 and Comparative Examples 1 and 2; and

FIG. 2 shows a graph which is plotted the relationship between birefringence when drawn ($\Delta$n(S)) and draw ratio (S) for the case of drawing an undrawn film of each of Examples 1 through 3 and Comparative Examples 1 and 2.

Best Mode for Carrying Out the Invention

Following is a detailed description of the present invention.

An acrylic resin (a) in the present invention is one obtained by polymerizing at least one monomer selected from methacrylic acid esters such as cyclohexyl methacrylate, t-butylcyclohexyl methacrylate and methyl methacrylate, and acrylic acid esters such as methyl acrylate, ethyl acrylate, butyl acrylate, isopropyl acrylate and 2-ethylhexyl acrylate. Of these, a homopolymer of methyl methacrylate, or a copolymer of methyl methacrylate with another monomer is preferable. Examples of monomers that can be copolymerized with methyl methacrylate include other methacrylic acid alkyl esters, acrylic acid alkyl esters, aromatic vinyl compounds such as styrene, vinyltoluene and $\alpha$-methylstyrene, vinyl cyanide compounds such as acrylonitrile and methacrylonitrile, maleimides such as N-phenylmaleimide and N-cyclohexylmaleimide, unsaturated carboxylic acid anhydrides such as maleic anhydride, and unsaturated acids such as acrylic acid, methacrylic acid and maleic acid.

Of these monomers that can be copolymerized with methyl methacrylate, in particular acrylic acid alkyl esters have excellent thermal decomposition resistance, and moreover a methacrylate resin obtained by copolymerizing with such an acrylic acid ester is preferable due to having high fluidity when molding. In the case of copolymerizing methyl methacrylate with an acrylic acid ester, the amount used of the acrylic acid alkyl ester is preferably not less than 0.1 wt% from the viewpoint of thermal decomposition resistance, and is preferably not more than 15 wt% from the viewpoint of heat resistance. This amount is more preferably in a range of from 0.2 to 14 wt%, particularly preferably from 1 to 12 wt%. Of such acrylic acid esters, in particular methyl acrylate and ethyl acrylate are most preferable since the above improvement effects are marked even upon copolymerizing with methyl methacrylate in a small amount. One of the above monomers that can be copolymerized with methyl methacrylate may be used, or a plurality may be used in combination.

The weight average molecular weight of the acrylic resin (a) is preferably in a range of from 50,000 to 200,000. This weight average molecular weight is preferably not less than 50,000 from the viewpoint of the strength of the molding, and is preferably not more than 200,000 from the viewpoint of moldability and fluidity. A more preferable range is from 70,000 to 150,000. Moreover, in the present invention, an isotactic polymethacrylate ester and a syndiotactic polymethacrylate ester may be used together.

As a process for producing the acrylic resin, for example an ordinarily carried out polymerization process such as casting polymerization, bulk polymerization, suspension polymerization, solution polymerization, emulsion polymerization or anionic polymerization can be used, although for an optical application it is preferable to avoid contamination with minute pieces of foreign matter as much as possible, and hence from this viewpoint bulk polymerization or solution polymerization not using a suspension or emulsion is preferable. In the case of carrying out solution polymerization, a solution prepared by dissolving the monomer mixture in an aromatic hydrocarbon solvent such as toluene or ethylbenzene can be used. In the case of carrying out the polymerization by bulk polymerization, the polymerization can be initiated through free radicals produced by heating or by irradiating with ionizing radiation as ordinarily carried out.

As an initiator used in the polymerization reaction, any initiator ordinarily used in radical polymerization can be used, for example an azo compound such as azobisisobutyronitrile, or an organic peroxide such as benzoyl peroxide, lauroyl peroxide or t-butylperoxy-2-ethyl hexanoate can be used; moreover, in the case in particular of carrying out the polymerization at a high temperature of not less than 90 °C, solution polymerization is the norm, and hence a peroxide or azobis initiator or the like that has a 10-hour half-life temperature of not less than 80 °C and is soluble in the organic solvent used is preferable, specific examples including 1,1-bis(t-butylperoxy)-3,3,5-trimethylcyclohexane, cyclohexane peroxide, 2,5-dimethyl-2,5-di(benzoylperoxy)hexane, 1,1-azobis(1-cyclohexanecarbonitrile), and 2-(carbamoylazo) isobutyronitrile. Such an initiator is used in a range of from 0.005 to 5 wt%.

As a molecular weight modifier used as required in the polymerization reaction, any one ordinarily used in radical polymerization may be used, particularly preferable examples being mercaptan compounds such as butyl mercaptan, octyl mercaptan, dodecyl mercaptan and 2-ethylhexyl thioglycolate. Such a molecular weight modifier is added within a concentration range such as to control the polymerization degree to be within a range as above.

Examples of an aliphatic polyester resin (b) in the present invention include a polymer having an aliphatic hydroxycarboxylic acid as a main constituent component thereof, and a polymer having an aliphatic polycarboxylic acid and an aliphatic polyhydric alcohol as main constituent components thereof. Specifically, examples of polymers having an aliphatic hydroxycarboxylic acid as a main constituent component thereof include polyglycolic acid, polylactic acid, poly-3-hydroxybutyric acid, poly-4-hydroxybutyric acid, poly-4-hydroxyvaleric acid, poly-3-hydroxyhexanoic acid and polycaprolactone, and examples of polymers having an aliphatic polycarboxylic acid and an aliphatic polyhydric alcohol as main constituent components thereof include polyethylene adipate, polyethylene succinate, polybutylene adipate and polybutylene succinate. One of these aliphatic polyesters may be used alone, or a plurality may be used. Of these aliphatic polyesters, polymers having a hydroxycarboxylic acid as a main constituent component thereof are preferable, it being particularly preferable to use a polylactic acid resin. One or more of such components (b) may be used.

A polylactic acid resin is a polymer having L-lactic acid and/or D-lactic acid as a main constituent component thereof, although from 0.1 to 30 wt% of another copolymer component other than lactic acid may be contained within a range such as to not impair the object of the present invention. Examples of such other copolymer component units include polycarboxylic acids, polyhydric alcohols, hydroxycarboxylic acids, and lactones; specifically, there can be used, for example, a polycarboxylic acid such as oxalic acid, malonic acid, succinic acid, glutaric acid, adipic acid, azelaic acid, sebacic acid, dodecanedioic acid, fumaric acid, cyclohexanedicarboxylic acid, terephthalic acid, isophthalic acid, phthalic acid, 2,6-naphthalenedicarboxylic acid, 5-sodiumsulfoisophthalic acid or 5-tetrabutylphosphoniumsulfoisophthalic acid, a polyhydric alcohol such as ethylene glycol, propylene glycol, butanediol, heptanediol, hexanediol, octanediol, nonanediol, decanediol, 1,4-cyclohexanedimethanol, neopentyl glycol, glycerol, trimethylolpropane, pentaerythritol, bisphenol A, an aromatic polyhydric alcohol obtained through an addition reaction of ethylene oxide to bisphenol, diethylene glycol, triethylene glycol, polyethylene glycol, polypropylene glycol and polytetramethylene glycol, a hydroxycarboxylic acid such as glycolic acid, 3-hydroxybutyric acid, 4-hydroxybutyric acid, 4-hydroxyvaleric acid, 6-hydroxycaproic acid or hydroxybenzoic acid, or a lactone such as glycolide, ε-caprolactone glycolide, ε-caprolactone, β-propiolactone, δ-butyrolactone, β- or γ-butyrolactone, pivalolactone or δ-valerolactone. One of these copolymer components may be used alone, or a plurality may be used.

As a process for producing the aliphatic polyester resin (b), a publicly known polymerization method can be used; in particular, for a polylactic acid resin, for example a direct polymerization method from lactic acid, or a ring opening polymerization method via a lactide can be used. A polylactic acid (b) in the present invention is a polymer having lactic acid, i.e. L-lactic acid and/or D-lactic acid, as main constituent component thereof. The polylactic acid resin is a polymer in which the molar proportion of either L-lactic acid units or D-lactic acid units is preferably not less than 85%, more preferably not less than 90%, yet more preferably not less than 94%, relative to 100% of the L-lactic acid units and D-lactic acid units combined. In the present invention, it is also possible to use together poly-L-lactic acid composed mainly of L-lactic acid and poly-D-lactic acid composed mainly of D-lactic acid.

The polylactic acid resin may be copolymerized with a lactic acid-derived monomer other than L-lactic acid or D-lactic acid, or with another component that can be copolymerized with a lactide, examples of such components including dicarboxylic acids, polyhydric alcohols, hydroxycarboxylic acids, and lactones. The polylactic acid resin can be obtained through polymerization using a publicly known polymerization method such as direct condensation with loss of water or lactide ring opening polymerization. Moreover, the molecular weight may be increased by using a binder such as a polyisocyanate as required.

As a preferable weight average molecular weight range for the polylactic acid resin, the weight average molecular weight is preferably not less than 30,000 from the viewpoint of mechanical properties, and preferably not more than 1,000,000 from the viewpoint of processability. A more preferable range is from 50,000 to 500,000, most preferably from 100,000 to 280,000.

In the present invention, the range of the proportion (parts by weight) of the acrylic resin (a) in the resin composition comprising the acrylic resin (a) and the aliphatic polyester resin (b) is preferably from 0.1 to 99.9 parts by weight based on 100 parts by weight in total of the acrylic resin (a) and the aliphatic polyester resin (b) from the viewpoint of the photoelastic coefficient, strength, heat resistance and haze, more preferably more than 50 to 99.9 parts by weight, particularly preferably from 60 to 95 parts by weight. It is preferable for this proportion to be more than 50 parts by weight, since then the haze under a hot wet atmosphere is low. In the case that the haze is low, or the change therein is low, the present invention can be suitably used for a display or the like. The range of the proportion (parts by weight) of the aliphatic polyester resin (b) is preferably from 0.1 to 99.9 parts by weight based on 100 parts by weight in total of the acrylic resin (a) and the aliphatic polyester resin (b) from the viewpoint of the photoelastic coefficient, strength, heat resistance and haze, more preferably from 0.1 to less than 50 parts by weight, particularly preferably from 5 to 40 parts by weight. It is preferable for this proportion to be less than 50 parts by weight, since then the haze under a hot wet atmosphere is low. In the case that the haze is low, or the change therein is low, the present invention can be suitably used for a display or the like.

For a molding comprising the resin composition according to the present invention, the photoelastic coefficient is preferably more than $-13 \times 10^{-12}$/Pa and less than $12 \times 10^{-12}$/Pa. The photoelastic coefficient is described in various documents (see, for example, Kagaku Sosetsu, No. 39, 1998 (published by Japan Scientific Societies Press)), and is defined as in the following formula:

$$C_R = \Delta n \, / \, \sigma_R \qquad\qquad \Delta n = nx - ny$$

wherein $C_R$ represents photoelastic coefficient, $\sigma_R$ represents tensile stress, $\Delta n$ represents birefringence, nx represents refractive index in direction of elongation, ny represents refractive index perpendicular to direction of elongation.

The closer the value of the photoelastic coefficient is to zero, the less the change in the birefringence with external force, and hence the lower the designed birefringence change for any of various applications. The value of the photoelastic coefficient is more preferably more than $-10 \times 10^{-12}$/Pa and less than $9 \times 10^{-12}$/Pa, particularly preferably more than $-5 \times 10^{-12}$/Pa and less than $5 \times 10^{-12}$/Pa.

For the resin composition according to the present invention, in the relationship between the birefringence when drawn ($\Delta n(S)$) and the draw ratio (S), the value of the gradient K determined through a least squares approximation preferably satisfies the following equation:

$$-8.0 \times 10^{-6} < K < 6.5 \times 10^{-5}$$

wherein $K = \Delta n(S) \, / \, S$.

A more preferable range is $-5.0 \times 10^{-6} < K < 5 \times 10^{-5}$, and a particularly preferable range is $-3.0 \times 10^{-6} < K < 2 \times 10^{-5}$.

For example, in the case of use in a retardation film such as a 1/4-wave plate, a material having a K value in such a range is preferable, since then the change in the birefringence with drawing or orientation is low, and hence deigning the birefringence as required is easy. Moreover, in the case of use in a polarizing plate protective film or the like, a material having a K value in such a range is preferable, since then birefringence due to orientation caused by molding is not prone to occur in extrusion molding or casting.

Moreover, the material molding for optical material that is drawn at least in a uniaxial direction, has an absolute value of the photoelastic coefficient of not more than $4 \times 10^{-12}$/Pa, and has an absolute value of the birefringence of not less than $5 \times 10^{-4}$ can be suitably used for an application in which a phase difference is required and the property of the change in the birefringence with stress being low is required, for example a retardation film. For such an application in which a phase difference is required and the property of the change in the birefringence with stress being low is required, for example a retardation film, it is more preferable for the absolute value of the photoelastic coefficient to be not more than $3 \times 10^{-12}$/Pa and the absolute value of the birefringence to be not less than $5 \times 10^{-4}$, and it is particularly preferable for the absolute value of the photoelastic coefficient to be not more than $2 \times 10^{-12}$/Pa and the absolute value of the birefringence to be not less than $5 \times 10^{-4}$. Such a molding can be obtained by making the draw ratio be different in the TD direction and the MD direction, and adjusting the amount of the aliphatic polyester resin (b). The difference in the draw ratio between the TD direction and the MD direction is preferably not less than 10%, more preferably not less than 40%, particularly preferably not less than 100%.

It is preferable for the amount of the aliphatic polyester resin (b) to be in a range of from 30 to 80 parts by weight based on 100 parts by weight in total of the acrylic resin (a) and the aliphatic polyester resin (b), since then the molding for optical material having an absolute value of the photoelastic coefficient of not more than $4 \times 10^{-12}$/Pa and an absolute value of the birefringence of not less than $5 \times 10^{-4}$ can be obtained. A more preferable range is from 30 to 70 parts by weight, and a particularly preferable range is from 30 to less than 50 parts by weight.

Moreover, the molding for optical material that is drawn at least in a uniaxial direction, has an absolute value of the photoelastic coefficient of not more than $4 \times 10^{-12}$/Pa, and has an absolute value of the birefringence of less than $2.5 \times 10^{-5}$ can be suitably used for an application in which the phase difference is required to be low and the property of the change in the birefringence with stress being low is required, for example a polarizing plate protective film. For such an application in which the phase difference is required to be low and the property of the change in the birefringence with stress being low is required, for example, a polarizing plate protective film, it is more preferable for the absolute value of the photoelastic coefficient to be not more than $3 \times 10^{-12}$/Pa and the absolute value of the birefringence to be less than $2.5 \times 10^{-5}$, and it is particularly preferable for the absolute value of the photoelastic coefficient to be not more than $2 \times 10^{-12}$/Pa and the absolute value of the birefringence to be less than $2.5 \times 10^{-5}$. Such a molding can be obtained by adjusting the amount of the aliphatic polyester resin (b). It is preferable for the amount of the aliphatic polyester resin (b) to be in a range of from 0.1 to less than 30 parts by weight based on 100 parts by weight in total of the acrylic resin (a) and the aliphatic polyester resin (b), since then the molding for optical material having an absolute value of the photoelastic coefficient of not more than $4 \times 10^{-12}$/Pa and an absolute value of the birefringence of less than $2.5 \times 10^{-5}$ can be obtained. A more preferable range is from 0.1 to 25 parts by weight, and a particularly preferable range is from 0.1 to 20 parts by weight.

For the molding for optical material according to the present invention, the absolute value Cw of the difference between the photoelastic coefficient C (700 nm) at a wavelength of 700 nm and the photoelastic coefficient C (400 nm) at a wavelength of 400 nm preferably satisfies the following relationship:

$$Cw < 1 \times 10^{-12}/Pa$$

wherein Cw = |C (700 nm) - C (400 nm)|.

By satisfying the above, a low change in the birefringence with stress is exhibited over the whole visible region, and hence the molding according to the present invention can be suitably used for a display. A more preferable range is not more than $0.5 \times 10^{-12}$/Pa.

In the present invention, by adding a hydrolysis inhibitor, a decrease in molecular weight due to hydrolysis of the component (b) can be suppressed, and hence, for example, a decrease in the strength and so on can be suppressed. As such a hydrolysis inhibitor, a compound that is reactive with a carboxylic acid or hydroxyl group which is a terminal functional group of the aliphatic polyester resin can be used, for example a carbodiimide compound, an isocyanate compound, or an oxazoline compound, in particular a carbodiimide compound (including a polycarbodiimide compound) being preferable since such a carbodiimide compound can be melt-kneaded well with the polyester resin and hence hydrolysis can be suppressed with only a small amount being added. An example of such a carbodiimide compound (including a polycarbodiimide compound) having at least one carbodiimide group in the molecule thereof is one that can be synthesized by subjecting any of various polymer isocyanates to a decarboxylation condensation reaction either without a solvent or in an inert solvent at a temperature of not less than approximately 70 °C using an organophosphorus compound or an organometallic compound as a catalyst. As a polycarbodiimide, one produced using any of various methods can be used, basically one produced using a conventional polycarbodiimide production method (U.S. Patent No. 2941956, Japanese Patent Publication No. 47-33279, J. Org. Chem. 28, 2069-2075 (1963), Chemical Review 1981, Vol. 81, No. 4, p619-621) can be used. Examples of organic diisocyanates used as a starting material for producing such a polycarbodiimide include aromatic diisocyanates, aliphatic diisocyanates, alicyclic diisocyanates, and mixture thereof, specific examples being 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexylmethane-4,4'-diisocyanate, methylcyclohexane diisocyanate, tetramethylxylylene diisocyanate, 2,6-diisopropylphenyl isocyanate, and 1,3,5-triisopropylbenzene-2,4-diisocyanate.

A preferable amount of the hydrolysis-inhibitor is from 0.01 to 50 parts by weight of the hydrolysis inhibitor based on 100 parts by weight in total of components (a) and (b). From the viewpoint of realizing the hydrolysis inhibition effect, this amount is preferably not less than 0.01 parts by weight, and from the viewpoint of the optical properties, this amount is preferably not more than 50 parts by weight. A more preferable range is from 0.01 to 30 parts by weight, yet more preferably from 0.1 to 30 parts by weight.

The molding according to the present invention preferably has a crystal melting heat ($\Delta H$) of less than 15 J/g, more preferably 12 J/g or less, particularly preferably 5 J/g or less. It is preferable for the crystal melting heat to be less than 15 J/g, since then the photoelastic coefficient and the birefringence are low.

Moreover, in the present invention, polymers other than components (a) and (b) may be mixed in within a range such as to not impair the object of the present invention. As such a polymer other than components (a) and (b), there can be added at least one selected from thermoplastic resins such as polyolefins such as polyethylene and polypropylene, styrene resins such as polystyrene and a styrene-acrylonitrile copolymer, polyamides, polyphenylene sulfide resins, polyether ether ketone resins, polyesters, polysulfones, polyphenylene oxides, polyimides, polyether imides and polyacetals, and thermosetting resins such as phenol resins, melamine resins, silicone resins and epoxy resins.

Furthermore, desired additives may be included in accordance with any of various objectives so long as this is within a range such as to not markedly impair the effects of the present invention. There are no particular limitations on the type of such an additive so long as the additive is one ordinarily used blended into a resin or a rubbery polymer. Examples thereof include inorganic fillers, pigments such as iron oxide, lubricants such as stearic acid, behenic acid, zinc stearate, calcium stearate, magnesium stearate and ethylene bisstearoamide, mold release agents, softeners/plasticizers such as paraffin process oils, naphthene process oils, aromatic process oils, paraffin, organopolysiloxanes and mineral oils, antioxidants such as hindered phenol type antioxidants, phosphorus type thermal stabilizers, lactone type thermal stabilizers and vitamin E type thermal stabilizers, hindered amine type photostabilizers, benzoate type photostabilizers, benzophenone type ultraviolet absorbers, triazine type ultraviolet absorbers, benzotriazole type ultraviolet absorbers, flame retardants, antistatic agents, reinforcing agents such as organic fibers, glass fibers, carbon fibers and metal whiskers, colorants, and other additives, or a mixture of the above.

There are no particular limitations on the process for producing the resin composition according to the present invention, it being possible to use a publicly known method. For example, it is possible to produce the resin composition by melt-kneading components (a) and (b) with a hydrolysis inhibitor and other components as described above being added as required using a melt-kneading machine such as a single screw extruder, a twin screw extruder, a Banbury mixer, a Brabender mixer or any of various kneaders, and then mold using a publicly known method such as injection molding, sheet molding, blow molding, injection blow molding, inflation molding, extrusion molding or foam molding; a secondary processing molding method such as air pressure molding or vacuum molding can also be used.

In the case that the form of the molding according to the present invention is a film or a sheet, a method such as extrusion molding or casting can be used. For example, an undrawn film or sheet can be extrusion molded using an extruder equipped with a T-die, a circular die or the like. In the case of obtaining the molding by extrusion molding, a material obtained by melt-kneading components (a) and (b) in advance can be used, or the molding may be carried out via melt-kneading when carrying out the extrusion molding. Moreover, it is also possible to dissolve components (a) and (b) using a solvent in which both components (a) and (b) dissolve such as chloroform or dichloromethane, and then cast an undrawn film by casting, drying and solidification.

Furthermore, as required, the undrawn film or sheet may be subjected to longitudinal uniaxial drawing in the mechanical flow direction, or transverse uniaxial drawing in a direction perpendicular to the mechanical flow direction, or a biaxially drawn film or sheet may be produced by drawing using a sequential biaxial drawing method comprising roll drawing and tenter drawing, a simultaneous biaxial drawing method using tenter drawing, a biaxial drawing method using tubular drawing, or the like. The draw ratio is preferably in a range of from 0.1 % to 1000% in at least one direction, more preferably from 0.2% to 600%, particularly preferably from 0.3% to 300%. By designing to be within such a range, a drawn molding that is desirable from the viewpoint of birefringence, heat resistance and strength can be obtained. In particular, from the viewpoint of folding endurance, and the absolute values of the birefringence and the photoelastic coefficient, the draw ratio in at least one direction is preferably in a range of from 5% to less than170%. A more preferable draw ratio is from 5% to 150%, and a particularly preferable draw ratio is from 5% to 100%. It is preferable for the draw ratio to be not less than 5% from the viewpoint of folding endurance, and less than 170% so that the absolute value of the photoelastic coefficient and the birefringence are low. The higher the number of times folding endured, the higher the mechanical strength as a film; it is preferable to carry out biaxial drawing, since then a film having a high folding endurance for both the MD and TD directions can be obtained. For a preferable film, the number of times folding endured is not less than 25 times for at least one direction, more preferably not less than 65 times, particularly preferably not less than 80 times.

The draw ratio can be determined from the following relationship by subjecting the drawn film obtained to shrinkage at a temperature at least 20 °C higher than the glass transition temperature. The glass transition temperature can be determined using a DSC method or a viscoelasticity method.

$$\text{Draw ratio (\%)} = [(\text{length before shrinkage} / \text{length after shrinkage}) - 1] \times 100$$

In the present invention, the only difference between a film and a sheet is the thickness, "film" referring to a molding having a thickness of not more than 300 $\mu$m, and "sheet" referring to a molding having a thickness of more than 300 $\mu$m. Moreover, in the present invention, a film preferably has a thickness of not less than 1 $\mu$m, more preferably not less than 5 $\mu$m, and a sheet preferably has a thickness of not more than 10 mm, more preferably not more than 5 mm.

The molding according to the present invention can be suitably used as an optical material used in a display such as a liquid crystal display, a plasma display, an organic EL display, a field emission display or a rear projection television, this being for a light guide plate, a diffusing plate, a polarizing plate protective film, a 1/4-wave plate, a 1/2-wave plate, a viewing angle controlling film, a liquid crystal optical compensation film or another retardation film, a display front plate, a display substrate, a lens, a touch panel or the like, or for a transparent substrate used in a solar cell or the like. In addition, the molding can also be used in the field of optical communication systems, optical exchange systems or optical measurement systems, this being for a waveguide, a lens, an optical fiber, an optical fiber substrate or covering material, an LED lens, a lens cover or the like. An optical material comprising the molding according to the present invention may also be subjected to surface function bestowing processing such as anti-reflection processing, transparent electrical conductivity processing, electromagnetic wave shielding processing, or gas barrier processing.

Examples

Following is a description of the present invention through Examples.

First, the evaluation methods used in the invention of the present application and the Examples will be described.

(I) Evaluation

(i) Measurement of photoelastic coefficient and birefringence Examples 1 to 3 and Comparative Examples 1 and 2

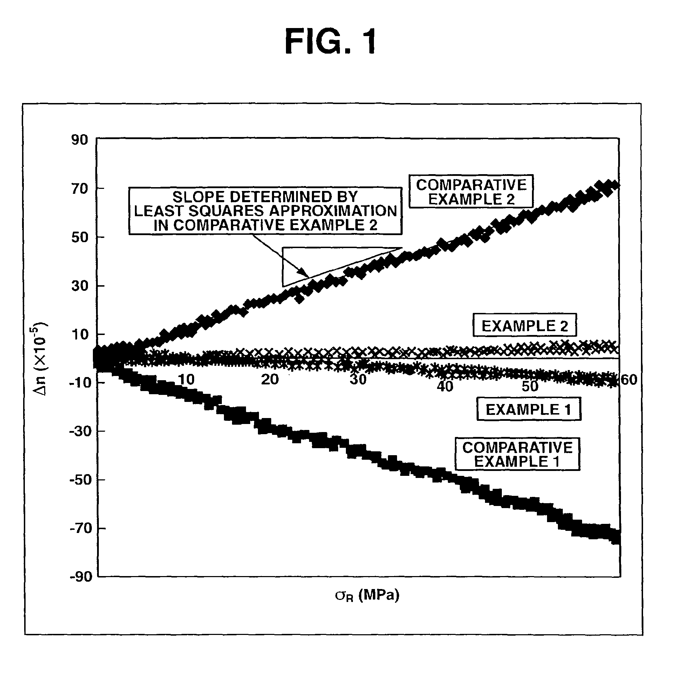

A birefringence measurement apparatus described in detail in Polymer Engineering and Science 1999, 39, 2349-2357 was used. A film drawing apparatus was placed in the path of a laser beam (wavelength 543.5 nm), and the birefringence was measured while applying tensile stress at 23 °C. The measurement was carried out with a test piece width of 8 mm at a strain rate during the drawing of 50%/min (chuck separation 10 mm, chuck movement speed 5 mm/min). From the relationship between the birefringence ($\Delta$n) and the tensile stress ($\sigma_R$), the gradient of the straight line was determined by a least squares approximation, and the photoelastic coefficient ($C_R$) was calculated. The relationship is shown schematically in FIG. 1. The lower the absolute value of the gradient, the closer the photoelastic coefficient is to zero, and hence the more desirable the optical properties.

$$C_R = \Delta n / \sigma_R \qquad\qquad \Delta n = nx - ny$$

(wherein $C_R$ represents photoelastic coefficient, $\sigma_R$ represents tensile stress, $\Delta$n represents birefringence, nx represents refractive index in direction of elongation, and ny represents refractive index perpendicular to direction of elongation)

The absolute value ($|\Delta n|$) of the birefringence ($\Delta$n) was determined as follows.

$$|\Delta n| = |nx - ny|$$

Examples 4 to 8 and Comparative Examples 3 and 4

The absolute value of the photoelastic coefficient, and the absolute value of the birefringence were measured as follows.

A film-shaped sample was cut into a 10 mm $\times$ 50 mm $\times$ thickness (TH) strip, the strip was attached to a small tensile tester made by Imoto Machinery Co., Ltd, and this was set in a RETS-100 retardation measurement apparatus made by Otsuka Electronics Co., Ltd.

The structure was such that the chuck separation of the tensile tester was 30 mm, and a hole for retardation measurement was formed in the center so that optical measurement was possible. Using the tensile tester, stress was applied to the sample through constant rate stretching. This stress was measured from the load on the load cell of the tensile tester and the cross-sectional area of the sample. The stretching rate was made to be 0.1 mm/min.

The measurement of retardation at each time was carried out using a rotating analyzer method, which is the method for the RETS-100 retardation measurement apparatus made by Otsuka Electronics Co., Ltd.

The photoelastic coefficient was calculated from the ratio between the coefficient k1 between the tensile tester measurement time and the stress, and the coefficient k2 between $\Delta$n, which was determined from the retardation, and the measurement time. The calculation was carried out over the time for which a straight line was maintained for the coefficients k1 and k2 after building up.

| | | |
|---|---|---|
| $\sigma_R = k1 \times t$ | t: | measurement time (sec) |
| $|\Delta n| = Re/TH = k2 \times t$ | $\sigma_R$: | stress (MPa) |
| $|C_R| = |\Delta n|/\sigma_R = k2/k1$ | $\Delta n$: | phase difference |
| | Re: | retardation (nm) |
| | TH: | Sample thickness ($\mu$m) |
| $|C_R|$: | | Absolute value of photoelastic coefficient ($\times 10^{-12}$/Pa) |

$$|\Delta n| = |nx - ny|$$

Moreover, for the RETS-100 retardation measurement apparatus made by Otsuka Electronics Co., Ltd., a white light source was used, and a spectroscope was built in, and hence the retardation could be measured simultaneously at each wavelength, the photoelastic coefficient being measured at each wavelength from the values thereof. The value of the photoelastic coefficient at 550 nm was determined, and is shown in Tables 7 to 9. Moreover, the photoelastic coefficient C (400 nm) at a wavelength of 400 nm and the photoelastic coefficient C (700 nm) at a wavelength of 700 nm were determined, and the absolute value of the difference between these photoelastic coefficients was determined, and is shown in Tables 7 to 9.

|C (700 nm) - C (400 nm)|:    Absolute value of difference between photoelastic coefficients

(ii) Measurement of total light transmittance

Measurement was carried out in accordance with ASTM D1003.

(iii) Measurement of number of times folding endured

This was carried out in accordance with JIS P8115 using an MIT rubbing resistance tester (made by Toyo Seiki Seisaku-sho Ltd.), under conditions of a load of 4.9 N, a folding angle of $\pm 135°$, a folding rate of 175 cpm, a test piece grip tip radius of R = 0.38 mm, and a separation of 0.25 mm. The test piece used was obtained by aligning the longitudinal direction with the MD and TD directions and cutting the film to a width of 1.5 cm and a length of 11 cm.

(iv) Molecular weight

Using GPC (GPC-8020 made by Tosoh Corporation, detection RI, column Shodex K-805 and 801 made by Showa Denko K.K. joined together), the weight average molecular weight was determined based on commercially available standard polystyrenes at a measurement temperature of 40 °C with chloroform as a solvent.

(v) Specific rotation

The specific rotation ($\alpha$) was determined using the method described in Macromolecules 1991, 24, 5657-5662.

(vi) Wet heat test

The film was suspended in a constant-humidity constant-temperature bath set to 60 °C and a humidity of 95%, and after a predetermined time had elapsed, the haze of the film was measured in accordance with ASTM D1003.

(vii) Measurement of crystal melting heat $\Delta H$

Using a Pyris 1 differential scanning calorimeter (DSC) made by PerkinElmer Inc., an approximately 10 mg sample cut out from the film was heated at a temperature scanning rate of 20 °C/min from 30 °C to 200 °C under a nitrogen atmosphere, and the crystal melting heat $\Delta H$ was determined from the peak due to crystal melting of component (B). Note that in the case that a crystallization peak appeared before the melting peak, the crystal melting heat $\Delta H$ was taken as the value obtained by subtracting the enthalpy of crystallization from the enthalpy of fusion.

(2) Starting materials etc. used

(i) Methyl methacrylate / methyl acrylate copolymers: (A-1), (A-2)

0.0294 parts by weight of 1,1-di-t-butylperoxy-3,3,5-trimethylcyclohexane and 0.115 parts by weight of n-octyl mercaptan were added to a monomer mixture containing 89.2 parts by weight of methyl methacrylate, 5.8 parts by weight of methyl acrylate, and 5 parts by weight of xylene, and mixing was carried out to uniformity.
This solution was continuously supplied into a sealed pressure-resistant reactor of internal volume 10 L, and polymerization was carried out under stirring with an average temperature of 130 °C and an average residence time of 2 hours, and then the mixture was continuously fed into a storage tank connected to the reactor, and volatile matter was removed under fixed conditions, and then the mixture was continuously fed in a molten state into an extruder, and pellets of a methyl methacrylate / methyl acrylate copolymer being the acrylic resin (a) used in the following Examples were obtained using the extruder. The copolymer (A-1) obtained had a methyl acrylate content of 6.0 wt%, a weight average molecular weight of 145,000, and a melt flow rate value at 230 °C and a 3.8 kg load as measured in accordance with ASTM-D1238 of 1.0 g/min.
Polymerization was carried out as for A-1 except that the monomer mixture composition was changed, and methyl methacrylate / methyl acrylate copolymer pellets were obtained. The copolymer (A-2) obtained had a methyl acrylate content of 2.0 wt%, a weight average molecular weight of 145,000, and a melt flow rate value at 230 °C and a 3.8 kg load as measured in accordance with ASTM-D1238 of 2.0 g/min.

(ii) Polylactic acids: (B-1), (B-2)

As a polylactic acid resin being the aliphatic polyester resin (b) used in the following Examples, a polylactic acid (copolymer of L-lactic acid and D-lactic acid) was prepared through a lactide ring opening polymerization method using a tin-based catalyst in accordance with, for example, the publicly known "Polylactide" by Hideto Tsuji in Biopolymers Vol. 4 (published by Wiley-VCH, 2002) pp. 129-178 and Published Japanese Translation of PCT Application No. 04-504731. (B-1) had a weight average molecular weight of 176,000, and a specific rotation of -150.6°
Moreover, 4031 D made by Cargill Dow which is a polylactic acid resin was used as (B-2).

Examples 1 to 3 and Comparative Examples 1 and 2

A dry blend of each of various compositions of the pellets of components (a) and (b) was charged into the hopper of a T-die-equipped extruder made by Technovel Corporation (model KZW15TW-25MG-NH, equipped with T-die of width 150 mm, lip thickness 0.5 mm). The resin temperature in the extruder cylinder and the temperature of the T-die were adjusted and extrusion molding was carried out, whereby an undrawn film of each of Examples 1 to 3 and Comparative Examples 1 and 2 was obtained. The composition, extrusion conditions, film thickness, total light transmittance, and photoelastic coefficient are shown in Table 1. Moreover, the relationship between $\Delta n$ and tensile stress for the undrawn film of each of Examples 1 and 2 and Comparative Examples 1 and 2 is shown in FIG. 1.

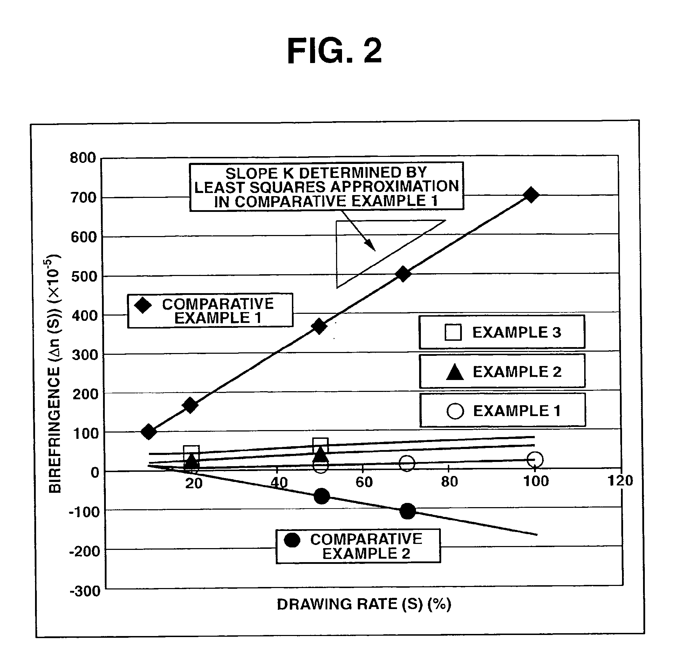

Next, the undrawn film of each of Examples 1 to 3 and Comparative Examples 1 and 2 obtained was subjected to uniaxial drawing (drawing rate 5%/min) using a tensile tester, the relationship between the birefringence when drawn ($\Delta n(S)$) and the draw ratio (S) was plotted, and the value of K was determined from a least squares approximation. The results are shown in Table 1. FIG. 2 shows a graph on which is plotted the relationship between the birefringence when drawn ($\Delta n(S)$) and the draw ratio (S).

nx required for calculating $|\Delta n| = |nx - ny|$ was taken as the refractive index in the uniaxial drawing direction, and ny was taken as the refractive index in a direction perpendicular to the uniaxial drawing direction. The value of nx - ny for the film comprising A-1 of Comparative Example 1 was negative.

The composition, the extrusion conditions, the drawing conditions, the film thickness, and the absolute value of the birefringence for Examples 1 to 3 and Comparative Examples 1 and 2 are shown respectively in Tables 2 to 6.

Examples 4 to 8 and Comparative Examples 3 and 4

A dry blend of each of various compositions of pellets of components (a) and (b) was charged into the hopper of a T-die-equipped extruder made by PLABOR Co., Ltd. (model BT-30-C-36-L, equipped with T-die of width 400 mm, lip thickness 0.8 mm). The resin temperature in the extruder cylinder and the temperature of the T-die were adjusted and extrusion molding was carried out, whereby an undrawn film of each of Examples 4 to 8 and Comparative Examples 3 and 4 was obtained. The composition, extrusion conditions, film thickness, total light transmittance, and photoelastic coefficient are shown in Table 7. The flow of the film (the extrusion direction) was taken as the MD direction, and a direction perpendicular to the MD direction as the TD direction.

Next, the undrawn film of each of Examples 4 to 8 obtained was subjected to longitudinal (MD direction) uniaxial drawing using a roller type longitudinal drawing machine made by Ichikin. To obtain the desired set draw ratio (0% in the case of not drawing, 40% in the case of drawing by 1.4x), drawing was carried out between two rollers (low speed side roller / high speed side roller) with the two rollers having different rotational speeds to one another. The roller speeds, and the drawing roller temperature are shown in Tables 7 to 10.

Next, the longitudinally uniaxially drawn film obtained was subjected to transverse (TD direction) drawing using a tenter drawing machine made by Ichikin. To obtain the desired set draw ratio (0% in the case of not drawing, 40% in the case of drawing by 1.4x), the drawing was carried out at a flow rate of 5 m/min with the tenter chuck separation being changed. The drawing rate and temperature are shown in Tables 7 to 10. Thermal fixing was carried out continuously after the drawing by passing the film through a predetermined temperature environment for 24 seconds.

The composition, the extrusion conditions, the drawing conditions, the film thickness, the photoelastic coefficient, the absolute value of the birefringence, and the number of times folding endured for Examples 4 to 8 and Comparative Example 3 are shown respectively in Tables 7 to 10. Commercially available TAC (triacetyl cellulose) was used as Comparative Example 4.

Table 1

**TABLE 1**

|  |  | EXAMPLE 1 | EXAMPLE 2 | EXAMPLE 3 | COMPARATIVE EXAMPLE 1 | COMPARATIVE EXAMPLE 2 |
|---|---|---|---|---|---|---|
| COMPOSITION (PARTS BY WEIGHT) | ACRYLIC RESIN (A-1) | 80 | 50 | 20 | 100 |  |
|  | ALIPHATIC POLYESTER RESIN (B-1) | 20 | 50 | 80 |  | 100 |
| MOLDING CONDITIONS | RESIN TEMPERATURE IN EXTRUDER CYLINDER (°C) | 234 | 210 | 194 | 240 | 190 |
|  | EXTRUDER T-DIE TEMPERATURE (°C) | 240 | 215 | 200 | 245 | 190 |
| FILM PROPERTIES | THICKNESS ($\mu$m) | 97 | 92 | 93 | 95 | 101 |
|  | TOTAL LIGHT TRANSMITTANCE (%) | MORE THAN 92% | MORE THAN 92% | MORE THAN 92% | MORETHAN 92% | MORETHAN 92% |
|  | PHOTOELASTIC COEFFICIENT ($\times 10^{-12}$/Pa$^{-1}$) | -1.6 | 1.4 | 4.5 | -13 | 12 |
|  | K VALUE | $2.5 \times 10^{-6}$ | $5.0 \times 10^{-6}$ | $5.0 \times 10^{-6}$ | $6.6 \times 10^{-6}$ | $-8.0 \times 10^{-6}$ |

Table 2

**TABLE 2**

| RELATIONSHIP BETWEEN BIREFRINGENCE ($\Delta n(S)$) AND DRAW RATIO FOR FILM OF EXAMPLE 1 | | | | | |
|---|---|---|---|---|---|
| | | TEST EXAMPLE 1-1 | TEST EXAMPLE 1-2 | TEST EXAMPLE 1-3 | TEST EXAMPLE 1-4 |
| COMPOSITION (PARTS BY WEIGHT) | ACRYLIC RESIN (A-1) | 80 | 80 | 80 | 80 |
| | ALIPHATIC POLYESTER RESIN (B-1) | 20 | 20 | 20 | 20 |
| MOLDING CONDITIONS | RESIN TEMPERATURE IN EXTRUDER CYLINDER (°C) | 234 | 234 | 234 | 234 |
| | EXTRUDER T-DIE TEMPERATURE (°C) | 240 | 240 | 240 | 240 |
| DRAWING CONDITIONS | DRAWING TEMPERATURE (°C) | 93 | 93 | 93 | 93 |
| | DRAW RATIO (%) (S) | 20 | 50 | 70 | 100 |
| FILM PROPERTIES | THICKNESS ($\mu$m) | 86 | 73 | 67 | 60 |
| | ABSOLUTE VALUE OF BIREFRINGENCE ($|\Delta n (S)|$) | $6.14 \times 10^{-6}$ | $1.20 \times 10^{-4}$ | $1.49 \times 10^{-4}$ | $2.68 \times 10^{-4}$ |

Table 3

**TABLE 3**

| RELATIONSHIP BETWEEN BIREFRINGENCE ($\Delta n(S)$) AND DRAW RATIO FOR FILM OF EXAMPLE 2 | | | |
|---|---|---|---|
| | | TEST EXAMPLE 2-1 | TEST EXAMPLE 2-2 |
| COMPOSITION (PARTS BY WEIGHT) | ACRYLIC RESIN (A-1) | 50 | 50 |
| | ALIPHATIC POLYESTER RESIN (B-1) | 50 | 50 |
| MOLDING CONDITIONS | RESIN TEMPERATURE IN EXTRUDER CYLINDER (°C) | 210 | 210 |
| | EXTRUDER T DIE TEMPERATURE (°C) | 215 | 215 |
| DRAWING CONDITIONS | DRAWING TEMPERATURE (°C) | 83 | 83 |
| | DRAW RATIO (%) (S) | 20 | 50 |

(continued)

| RELATIONSHIP BETWEEN BIREFRINGENCE (Δn(S)) AND DRAW RATIO FOR FILM OF EXAMPLE 2 | | TEST EXAMPLE 2-1 | TEST EXAMPLE 2-2 |
|---|---|---|---|
| FILM PROPERTIES | THICKNESS (μm) | 85 | 77 |
| | ABSOLUTE VALUE OF BIREFRINGENCE (\|Δn (S)\|) | $2.59 \times 10^{-4}$ | $4.08 \times 10^{-4}$ |

Table 4

**TABLE 4**

| RELATIONSHIP BETWEEN BIREFRINGENCE (Δn(S)) AND DRAW RATIO FOR FILM OF EXAMPLE 3 | | TEST EXAMPLE 3-1 | TEST EXAMPLE 3-2 |
|---|---|---|---|
| COMPOSITION (PARTS BY WEIGHT) | ACRYLIC RESIN (A-1) | 20 | 20 |
| | ALIPHATIC POLYESTER RESIN (B-1) | 80 | 80 |
| MOLDING CONDITIONS | RESIN TEMPERATURE IN EXTRUDER CYLINDER (°C) | 194 | 194 |
| | EXTRUDER T-DIE TEMPERATURE (°C) | 200 | 200 |
| DRAWING CONDITIONS | DRAWING TEMPERATURE (°C) | 72 | 72 |
| | DRAW RATIO (%) (S) | 20 | 50 |
| FILM PROPERTIES | THICKNESS (μm) | 91 | 83 |
| | ABSOLUTE VALUE OF BIREFRINGENCE (\|Δn (S)\|) | $4.61 \times 10^{-4}$ | $6.11 \times 10^{-4}$ |

Table 5

**TABLE 5**

| RELATIONSHIP BETWEEN BIREFRINGENCE (Δn(S)) AND DRAW RATIO FOR FILM OF COMPARATIVE EXAMPLE 1 | | TEST EXAMPLE 1'-1 | TEST EXAMPLE 1'-2 |
|---|---|---|---|
| COMPOSITION (PARTS BY WEIGHT) | ACRYLIC RESIN (A-1) | 100 | 100 |
| | ALIPHATIC POLYESTER RESIN (B-1) | | |
| MOLDING CONDITIONS | RESIN TEMPERATURE IN EXTRUDER CYLINDER (°C) | 240 | 240 |
| | EXTRUDERT-DIE TEMPERATURE (°C) | 245 | 245 |
| DRAWING CONDITIONS | DRAWING TEMPERATURE (°C) | 100 | 100 |
| | DRAW RATIO (%) (S) | 50 | 100 |

(continued)

| RELATIONSHIP BETWEEN BIREFRINGENCE (Δn(S)) AND DRAW RATIO FOR FILM OF COMPARATIVE EXAMPLE 1 | | | |
|---|---|---|---|
| | | TEST EXAMPLE 1'-1 | TEST EXAMPLE 1'-2 |
| FILM PROPERTIES | THICKNESS (μm) | 74 | 55 |
| | ABSOLUTE VALUE OF BIREFRINGENCE (\|Δn (S)\|) | $6.70\times10^{-4}$ | $1.07\times10^{-3}$ |

Table 6

**TABLE 6**

| RELATIONSHIP BETWEEN BIREFRINGENCE (Δn(S)) AND DRAW RATIO FOR FILM OF COMPARATIVE EXAMPLE 2 | | | | | | |
|---|---|---|---|---|---|---|
| | | TEST EXAMPLE 2'-1 | TEST EXAMPLE 2'-2 | TEST EXAMPLE 2'-3 | TEST EXAMPLE 2'-4 | TEST EXAMPLE 2'-5 |
| COMPOSITION (PARTS BY WEIGHT) | ACRYLIC RESIN (A-1) | | | | | |
| | ALIPHATIC POLYESTER RESIN (B-1) | 100 | 100 | 100 | 100 | 100 |
| MOLDING CONDITIONS | RESIN TEMPERATURE IN EXTRUDER CYLINDER (°C) | 190 | 190 | 190 | 190 | 190 |
| | EXTRUDER T-DIE TEMPERATURE (°C) | 190 | 190 | 190 | 190 | 190 |
| DRAWING CONDITIONS | DRAWING TEMPERATURE (°C) | 65 | 65 | 65 | 65 | 65 |
| | DRAW RATIO (%) (S) | 10 | 20 | 50 | 70 | 100 |
| FILM PROPERTIES | THICKNESS (μm) | 87 | 87 | 78 | 72 | 64 |
| | ABSOLUTE VALUE OF BIREFRINGENCE (\|Δn (S)\|) | $1.04X10^{-3}$ | $1.64\times10^{-3}$ | $3.68\times10^{-3}$ | $5.08\times10^{-3}$ | $6.98\times10^{-3}$ |

Table 7

**TABLE 7**

|  |  | EXAMPLE 4 | EXAMPLE 5 | EXAMPLE 6 | EXAMPLE 7 | EXAMPLE 8 | COMPARATIVE EXAMPLE 3 | COMPARATIVE EXAMPLE 4 |
|---|---|---|---|---|---|---|---|---|
| COMPOSITION (PARTS BY WEIGHT) | ACRYLIC RESIN (A-2) | 95 | 85 | 62 | 50 | 20 |  | COMMERCIALLY AVAILABLE TAC FILM |
|  | ALIPHATIC POLYESTER RESIN (B-2) | 5 | 15 | 38 | 50 | 80 |  | |
|  | POLYCARBONATE |  |  |  |  |  | 100 | |
| MOLDING CONDITIONS | RESIN TEMPERATURE IN EXTRUDER CYLINDER (°C) | 250 | 245 | 230 | 220 | 205 | 280 |  |
|  | EXTRUDERT-DIE TEMPERATURE (°C) | 255 | 250 | 235 | 225 | 210 | 280 |  |

| FILM PROPERTIES | | EXAMPLE 4 | EXAMPLE 5 | EXAMPLE 6 | EXAMPLE 7 | EXAMPLE 8 | COMPARATIVE EXAMPLE 3 | COMPARATIVE EXAMPLE 4 |
|---|---|---|---|---|---|---|---|---|
| | THICKNESS ($\mu$m) | 153 | 154 | 197 | 225 | 225 | 200 | 100 |
| | TOTAL LIGHT TRANSMITTANCE (%) | MORETHAN 92% | MORETHAN 92% | MORETHAN 92% | MORETNAN 92% | MORE THAN 92% | MORETHAN 92% | MORE THAN 92% |
| | ABSOLUTE VALUE OF PHOTOELASTIC COEFFICIENT ($\times 10^{-12}$/Pa$^{-1}$) | 3.8 | 2.4 | 0.8 | 1.3 | 4.3 | 74.4 | 14.6 |
| | ABSOLUTE VALUE OF BIREFRINGENCE ($|\Delta n (S)|$) | $1.0 \times 10^{-5}$ | $8.0 \times 10^{-6}$ | $2,2 \times 10^{-5}$ | $9.9 \times 10^{-5}$ | $5.8 \times 10^{-4}$ | $2.7 \times 10^{-5}$ | $2.6 \times 10^{-5}$ |
| | NO. TIMES FOLDING ENDURED MD DIRECTION (TIMES)/ TD DIRECTION (TIMES) | 1/1 | 1/1 | 1/1 | 1/1 | 1/1 | 22/20 | 62/58 |
| | Cw ($\times 10^{-12}$/Pa$^{-1}$) | 0 | 0.2 | 0.1 | 0.2 | 0.3 | 12.2 | 1.1 |

EP 1 860 151 A1

Table 8

**TABLE 8**

| | | TEST EXAMPLE 4-1 | TEST EXAMPLE 4-3 | TEST EXAMPLE 5-1 | TEST EXAMPLE 5-2 | TEST EXAMPLE 6-1 | TEST EXAMPLE 6-2 | TEST EXAMPLE 6-3 |
|---|---|---|---|---|---|---|---|---|
| DRAWN FILM | | FILM OF EXAMPLE 4 | FILM OF EXAMPLE 4 | FILM OF EXAMPLE 5 | FILM OF EXAMPLE 5 | FILM OF EXAMPLE 6 | FILM OF EXAMPLE 6 | FILM OF EXAMPLE 6 |
| DRAWING CONDITIONS | MD DRAWING TEMPERATURE (°C) | 107 | 107 | 100 | 100 | 82 | 82 | 82 |
| | SPEED ON LOW SPEED SIDE (m/min)/ SPEED ON HIGH SPEED SIDE (m/min) | 1/1.4 | 1/1.4 | 1/1.4 | 1/1,4 | 1/1.4 | 1/1.4 | 1/1.4 |
| | MD DRAW RATIO (%) | 40 | 40 | 40 | 40 | 40 | 40 | 40 |
| | TD DRAWING TEMPERATURE (°C) | 120 | | 115 | | 95 | 95 | |
| | TD DRAWING RATE (%/min) | 143 | | 143 | | 143 | 536 | |
| | TD DRAW RATIO (%) | 40 | 0 | 40 | 0 | 40 | 150 | 0 |

EP 1 860 151 A1

(continued)

| | | TEST EXAMPLE 4-1 | TEST EXAMPLE 4-3 | TEST EXAMPLE 5-1 | TEST EXAMPLE 5-2 | TEST EXAMPLE 6-1 | TEST EXAMPLE 6-2 | TEST EXAMPLE 6-3 |
|---|---|---|---|---|---|---|---|---|
| DRAWN FILM | | FILM OF EXAMPLE 4 | FILM OF EXAMPLE 4 | FILM OF EXAMPLE 5 | FILM OF EXAMPLE 5 | FILM OF EXAMPLE 6 | FILM OF EXAMPLE 6 | FILM OF EXAMPLE 6 |
| FILM PROPERTIES | THICKNESS ($\mu$m) | 64 | 115 | 74 | 118 | 78 | 31 | 98 |
| | TOTAL LIGHT TRANSMITTANCE (%) | MORE THAN 92% | MORETHAN 92% | MORETHAN 92% | MORE THAN 92% | MORE THAN 92% | MORETHAN 92% | MORE THAN 92% |
| | ABSOLUTE VALUE OF PHOTOELASTIC COEFFICIENT ($\times 10^{-12}$/Pa$^{-1}$) | 3.6 | 2.8 | 1.9 | 1.8 | 1.2 | 0.6 | 1.6 |
| | ABSOLUTE VALUE OF BIREFRINGENCE ($|\Delta n (S)|$) | $2.4\times10^{-5}$ | $2.1\times10^{-4}$ | $2.4\times10^{-6}$ | $1.5\times10^{-5}$ | $2.2\times10^{-4}$ | $1.1\times10^{-3}$ | $5.2\times10^{-4}$ |
| | $\Delta H$ (J/g) | 0 | 0 | 0 | 0 | 0 | 0 | 0 |
| | NO.TIMES FOLDING ENDURED MD DIRECTION (TIMES)/ TD DIRECTION (TIMES) | 117/128 | 66/1 | 135/125 | 80/1 | MORE THAN 200/ MORE THAN 200 | MORE THAN 2001 MORE THAN 200 | 132/1 |
| | Cw ($\times 10^{-12}$/Pa$^{-1}$) | 0.4 | 0.1 | 0.5 | 0.1 | 0.2 | 0.2 | 0.3 |

Table 9

**TABLE 9**

| | | TEST EXAMPLE 7-1 | TEST EXAMPLE 7-2 | TEST EXAMPLE 8-1 | TEST EXAMPLE 8-2 |
|---|---|---|---|---|---|
| DRAWN FILM | | FILM OF EXAMPLE 7 | FILM OF EXAMPLE 7 | FILM OF EXAMPLE 8 | FILM OF EXAMPLE 8 |
| DRAWING CONDITIONS | MD DRAWING TEMPERATURE (°C) | | | | |
| | SPEED ON LOW SPEED SIDE (m/min)/ SPEED ON HIGH SPEED SIDE (m/min) | | | | |
| | MD DRAW RATIO (%) | 0 | 0 | 0 | 0 |
| | TD DRAWING TEMPERATURE (°C) | 90 | 90 | 80 | 80 |
| | THERMAL FIXING TEMPERATURE | 130 | 130 | 135 | 135 |
| | TD DRAWING RATE (%/min) | 357 | 607 | 357 | 607 |
| | TD DRAW RATIO (%) | 100 | 200 | 100 | 200 |
| FILM PROPERTIES | THICKNESS (μm) | 112 | 83 | 111 | 84 |
| | TOTAL LIGHT TRANSMITTANCE (%) | MORETHAN 92% | MORETHAN 92% | MORETHAN 92% | MORETHAN 92% |
| | ABSOLUTE VALUE OF PHOTOELASTIC COEFFICIENT ($\times 10^{-12}$/Pa$^{-1}$) | 0.3 | 1.7 | 2.8 | 5.8 |
| | ABSOLUTE VALUE OF BIREFRINGENCE ($|\Delta n (S)|$) | $6.6 \times 10^{-5}$ | $3.0 \times 10^{-3}$ | $3.7 \times 10^{-4}$ | $1.6 \times 10^{-2}$ |
| | $\Delta H$ (J/g) | 0 | 14.8 | 11.1 | 28.1 |
| | NO.TIMES FOLDING ENDURED MD DIRECTION (TIMES)/ TD DIRECTION (TIMES) | 1/149 | 1/ MORE THAN 200 | 1/167 | 1/ MORE THAN 200 |
| | Cw ($\times 10^{-12}$/Pa$^{-1}$) | 0.3 | 0.3 | 0.4 | 0.4 |

Table 10

**TABLE 10**

| | | TEST EXAMPLE 4-3 | TEST EXAMPLE 6-1 | TEST EXAMPLE 6-2 | TEST EXAMPLE 6-3 | TEST EXAMPLE 7-1 | TEST EXAMPLE 8-1 | TEST EXAMPLE 2'-3 | TEST EXAMPLE 4'-1 |
|---|---|---|---|---|---|---|---|---|---|
| DRAWN FILM | | FILM OF EXAMPLE 4 | FILM OF EXAMPLE 6 | FILM OF EXAMPLE 6 | FILM OF EXAMPLE 6 | FILM OF EXAMPLE 7 | FILM OF EXAMPLE 8 | FILM OF COMPARATIVE EXAMPLE 2 | COMMERCIALLY AVAILABLE TAC FILM |
| DRAWING CONDITIONS | MD DRAWING TEMPERATURE (°C) | 107 | 82 | 82 | 82 | | | | |
| | SPEED ON LOW SPEED SIDE (m/min)/SPEED ON HIGH SPEED SIDE (m/min) | 1/1.4 | 1/1.4 | 1/1.4 | 1/1.4 | | | | |
| | MD DRAW RATIO (%) | 40 | 40 | 40 | 40 | 0 | 0 | 0 | ---- |
| | TD DRAWING TEMPERATURE (°C) | | 95 | 95 | | 90 | 80 | | |
| | TD DRAWING RATE (%/min) | | 143 | 536 | | 357 | 357 | | |
| | TD DRAW RATIO (%) | 0 | 40 | 150 | 0 | 100 | 100 | 0 | ---- |
| FILM PROPERTIES | THICKNESS (μm) | 115 | 78 | 31 | 98 | 112 | 111 | 101 | 100 |
| | HAZE (%) AFTER WET HEAT TEST BEFORE TEST | LESS THAN 1 | LESS THAN 1 | LESS THAN 1 | LESS THAN 1 | LESS THAN 1 | 1.31 | LESS THAN 1 | LESS THAN 1 |
| | AFTER 1 DAY | LESS THAN 1 | LESS THAN 1 | LESS THAN 1 | LESS THAN 1 | 2.10 | 3.24 | 30.9 | 2.16 |
| | AFTER 7 DAYS | LESS THAN 1 | LESS THAN 1 | LESS THAN 1 | LESS THAN 1 | 2.37 | 30.7 | 40.6 | 2.5 |

From the above results, it was ascertained that for the molding constituted from the resin composition comprising the acrylic resin, and the polylactic acid resin which is the aliphatic polyester resin, the value of the photoelastic coefficient is low, and the change in the birefringence with external force is low.

Industrial Applicability

The molding containing the resin composition of the present invention has excellent optical properties, being transparent and having a low change in birefringence with external force, and hence can be suitably used in a display such as a liquid crystal display, a plasma display, an organic EL display, a field emission display or a rear projection television, this being for a polarizing plate protective film, a retardation plate such as a 1/4-wave plate or a 1/2-wave plate, a liquid crystal optical compensation film such as a viewing angle controlling film, a display front plate, a display substrate, a lens, a touch panel or the like, or for a transparent substrate used in a solar cell or the like. In addition, such a molding can also be used in the field of optical communication systems, optical exchange systems or optical measurement systems, this being for a waveguide, a lens, an optical fiber, an optical fiber covering material, an LED lens, a lens cover or the like.

**Claims**

1. A resin composition for optical material comprising:

   an acrylic resin (a); and
   an aliphatic polyester resin (b).

2. The resin composition for optical material according to Claim 1, wherein the composition comprises from 60 to 95 parts by weight of the acrylic resin

   (a) and from 5 to 40 parts by weight of the aliphatic polyester resin (b).

3. The resin composition for optical material according to Claim 1 or 2, wherein the aliphatic polyester resin is a polylactic acid resin.

4. The resin composition for optical material according to any one of Claims 1 to 3, wherein in a relationship between birefringence when drawn ($\Delta n(S)$) and draw ratio (S), a value of a gradient K determined through a least squares approximation satisfies the following equation:

$$-8.0 \times 10^{-6} < K < 6.5 \times 10^{-5}$$

   wherein $K = \Delta n(S) / S$.

5. A molding for optical material obtained by molding the resin composition for optical material according to any one of Claims 1 to 4.

6. The molding for optical material according to Claim 5, wherein a draw ratio in at least one direction is in a range of from 5% to less than 150%.

7. The molding for optical material according to Claim 5 or 6, wherein a crystal melting heat ($\Delta H$) is less than 15 J/g.

8. The molding for optical material according to any one of Claims 5 to 7, wherein the molding is a film or sheet which is molded by extrusion molding.

9. The molding for optical material according to any one of Claims 5 to 7, the molding is a film or sheet which is molded by casting.

10. The molding for optical molding according to any one of Claims 5 to 9, wherein a photoelastic coefficient is more than $-13 \times 10^{-12}$/Pa and less than $12 \times 10^{-12}$/Pa.

**11.** The molding for optical material according to any one of Claims 5 to 10, wherein the molding is drawn in at least a uniaxial direction, and an absolute value of the photoelastic coefficient is not more than $4 \times 10^{-12}$/Pa, and an absolute value of a birefringence is not less than $5 \times 10^{-4}$.

**12.** The molding for optical material according to any one of Claims 5 to 11, whrein the molding is drawn in at least a uniaxial direction, and an absolute value of the photoelastic coefficient is not more than $4 \times 10^{-12}$/Pa, and an absolute value of birefringence is less than $2.5 \times 10^{-5}$.

**13.** The molding for optical material according to any one of Claims 5 to 12, wherein a absolute value Cw of a difference between the photoelastic coefficient C (700 nm) at a wavelength of 700 nm and the photoelastic coefficient C (400 nm) at a wavelength of 400 nm satisfies the following relationship:

$$Cw < 1 \times 10^{-12}/Pa$$

wherein Cw = |C (700 nm) - C (400 nm)|.

**14.** A polarizing plate protective film comprising the molding according to any one of Claims 5 to 13.

**15.** A retardation film comprising the molding according to any one of Claims 5 to 13.

# FIG. 1

# FIG. 2

<div align="center">

**INTERNATIONAL SEARCH REPORT**

</div>

| | International application No. |
|---|---|
| | PCT/JP2006/300354 |

**A.　CLASSIFICATION OF SUBJECT MATTER**
*C08L33/06*(2006.01), *C08J5/18*(2006.01), *C08L67/00*(2006.01),
*G02B5/30*(2006.01)

According to International Patent Classification (IPC) or to both national classification and IPC

**B.　FIELDS SEARCHED**

Minimum documentation searched (classification system followed by classification symbols)
C08J5/18, C08L33/06, C08L67/00, G02B5/30

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPI/L

**C.　DOCUMENTS CONSIDERED TO BE RELEVANT**

| Category* | Citation of document, with indication, where appropriate, of the relevant passages | Relevant to claim No. |
|---|---|---|
| P,X<br>P,A | JP 2005-171204 A (Unitika Ltd.),<br>30 June, 2005 (30.06.05),<br>Claims; Par. Nos. [0028] to [0031]<br>(Family: none) | 1-13<br>14,15 |
| P,X<br>P,A | JP 2005-036054 A (Toray Industries, Inc.),<br>10 February, 2005 (10.02.05),<br>Claims; Par. Nos. [0028] to [0031]<br>(Family: none) | 1-13<br>14,15 |
| X<br>A | JP 10-060212 A (Asahi Chemical Industry<br>Co., Ltd.),<br>03 March, 1998 (03.03.98),<br>Claims; Par. Nos. [0035], [0036]<br>(Family: none) | 1-13<br>14,15 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>　22 March, 2006 (22.03.06) | Date of mailing of the international search report<br>　04 April, 2006 (04.04.06) |
|---|---|
| Name and mailing address of the ISA/<br>　Japanese Patent Office | Authorized officer |
| Facsimile No. | Telephone No. |

Form PCT/ISA/210 (second sheet) (April 2005)

**EP 1 860 151 A1**

| | INTERNATIONAL SEARCH REPORT | International application No. |
|---|---|---|
| | | PCT/JP2006/300354 |

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2003-238788 A (Toray Industries, Inc.),<br>27 August, 2003 (27.08.03),<br>Claims; Par. No. [0007]<br>(Family: none) | 1-13<br>14,15 |
| X<br>A | JP 2003-286401 A (Toray Industries, Inc.),<br>10 October, 2003 (10.10.03),<br>Claims; Par. No. [0009]<br>(Family: none) | 1-13<br>14,15 |
| A | JP 08-334607 A (Fuji Photo Film Co., Ltd.),<br>17 December, 1996 (17.12.96),<br>Claims; Par. No. [0015]<br>(Family: none) | 1-15 |

Form PCT/ISA/210 (continuation of second sheet) (April 2005)

29

**EP 1 860 151 A1**

## REFERENCES CITED IN THE DESCRIPTION

### Patent documents cited in the description

- WO 2004087812 A
- US 2941956 A
- JP 47033279 A
- JP 4504731 W

### Non-patent literature cited in the description

- Kagaku Sosetsu. Japan Scientific Societies Press, 1998
- *Polymer,* 1998, vol. 39
- *J. Org. Chem.,* 1963, vol. 28, 2069-2075
- *Chemical Review,* 1981, vol. 81 (4), 619-621
- *Polymer Engineering and Science,* 1999, vol. 39, 2349-2357
- *Macromolecules,* 1991, vol. 24, 5657-5662
- Polylactide. **HIDETO TSUJI.** Biopolymers. Wiley-VCH, 2002, vol. 4, 129-178